# FASCICULE DE BREVET EUROPEEN

(11) **EP 3 841 022 B1**
(45) Date de publication et mention de la délivrance du brevet: **28.09.2022**
(21) Numéro de dépôt: 19774134.1
(22) Date de dépôt: 22.08.2019
(51) Int. Cl.: B64F 5/50, B23K 37/053

(54) **ENSEMBLE ET PROCÉDÉ DE MANUTENTION D'UN ENSEMBLE PROPULSIF D'AÉRONEF**
VORRICHTUNG UND VERFAHREN ZUR HANDHABUNG EINER FLUGZEUGANTRIEBSANORDNUNG
HANDLING ASSEMBLY AND METHOD FOR HANDLING AN AIRCRAFT PROPULSION ASSEMBLY

(30) Priorité: 24.08.2018 FR 1857647
(43) Date de publication de la demande: 30.06.2021
(73) Titulaire: Safran Nacelles, 76700 Gonfreville-l'Orcher (FR)
(72) Inventeur: GUILLOIS, Denis, 77550 MOISSY CRAMAYEL (FR)
(74) Mandataire: Germain Maureau
(86) Numéro de dépôt international: PCT/FR2019/051951
(87) Numéro de publication internationale: WO 2020/039149

(56) Documents cités:
- EP-A1- 2 602 193
- FR-A1- 2 848 200
- FR-A1- 2 922 498
- FR-A1- 2 992 292
- US-A1- 2011 204 006
- US-A1- 2017 210 039

## Description

La présente invention se rapporte à un ensemble de manutention d'un ensemble propulsif d'aéronef et à un procédé de manutention d'un tel ensemble propulsif d'aéronef.

Un aéronef est mû par plusieurs ensembles propulsifs comprenant chacun un turboréacteur logé dans une nacelle.

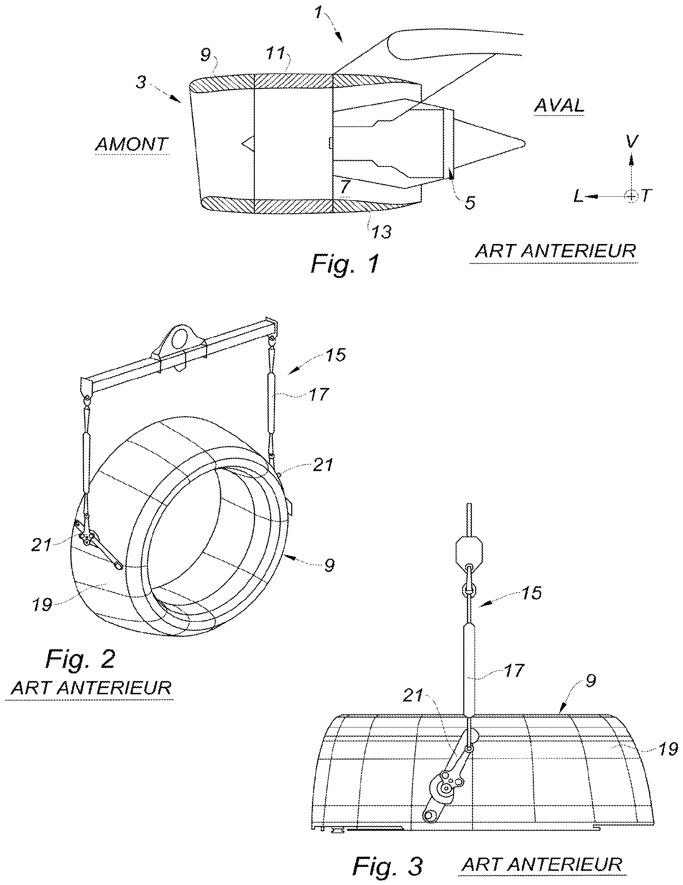

Comme cela est représenté à la figure 1, un ensemble propulsif 1 comprend une nacelle 3 et un turboréacteur 5 par exemple du type double flux, apte à générer, par l'intermédiaire des aubes de la soufflante en rotation, un flux de gaz chauds (également dénommé flux primaire) et un flux d'air froid (également dénommé flux d'air secondaire) qui circule à l'extérieur du turboréacteur à travers un passage annulaire 7, également appelé veine annulaire, formé entre deux parois concentriques de la nacelle. Les flux primaire et secondaire sont éjectés du turboréacteur par l'arrière de la nacelle.

La nacelle présente généralement une structure tubulaire comprenant une section amont, ou entrée d'air 9, située en amont du turboréacteur, une section médiane 11 destinée à entourer une soufflante du turboréacteur, une section aval 13, destinée à entourer la chambre de combustion du turboréacteur, embarquant un dispositif d'inversion de poussée, et peut être terminée par une tuyère d'éjection située en aval du turboréacteur.

Afin de réaliser des opérations de maintenance de la nacelle, il est souhaitable de pouvoir manipuler l'entrée d'air de la nacelle, indépendamment de ses sections médiane et aval. Le document US2017210039 décrit un outil de démontage pour retirer le tube d'entrée acoustique d'un moteur d'avion à réaction.

On se réfère à la figure 2 illustrant une réalisation de l'art antérieur permettant de manipuler une entrée d'air.

L'ensemble de manutention 15 de l'art antérieur comporte deux élingues 17, reliées et fixées en leur extrémité inférieure à une paroi externe 19 de l'entrée d'air 9 de la nacelle en contact avec le flux d'air extérieur s'écoulant autour de la nacelle lorsque la nacelle est en fonctionnement.

Pour ce faire, la nacelle comporte au niveau de sa paroi externe 19 deux ferrures d'attache 21, formant des points de hissage sur lesquels sont montées les élingues 17.

Lorsque les élingues 17 sont montées sur les ferrures d'attache 21 de l'entrée d'air 9, un opérateur peut manipuler l'entrée d'air, par exemple comme illustré à la figure 3 en la faisant basculer verticalement afin de pouvoir la déposer sur le sol dans cette position verticale.

Une problématique récurrente des avionneurs est celle de réduire les perturbations aérodynamiques de la nacelle. Pour ce faire, les fabricants de nacelles cherchent à rendre lisse certaines surfaces de la nacelle, en particulier la paroi externe de la nacelle.

Ce but peut être en partie atteint en prévoyant une nacelle comportant une entrée d'air dite laminaire, c'est-à-dire une entrée d'air exemptes des ferrures d'attache sur lesquelles sont destinées à être montées les élingues de l'ensemble de manutention de l'art antérieur.

La suppression des ferrures d'attache de la paroi externe de l'entrée d'air de la nacelle rend incompatible l'utilisation de cet ensemble de manutention de l'art antérieur sur des nacelles laminaires.

La présente invention vise à résoudre les inconvénients ci-dessus en proposant un ensemble de manutention d'une entrée d'air d'une nacelle, en particulier du type qui ne comporte aucun point d'attache au niveau de sa paroi externe.

Pour ce faire, la présente invention concerne un ensemble de manutention d'un ensemble propulsif comportant une nacelle et un turboréacteur d'aéronef, ledit ensemble de manutention étant remarquable en ce qu'il comporte :
- un châssis, comportant au moins trois bras radialement espacés entre eux, ledit châssis étant mobile en rotation autour d'un axe transverse à un axe longitudinal de l'ensemble de manutention, et
- au moins trois branches de manipulation de ladite nacelle, chacune étant montée transversalement sur un desdits au moins trois bras du châssis, s'étendant le long dudit axe longitudinal dudit ensemble de manutention, lesdites au moins trois branches de manipulation comportant au moins une branche de travail mobile, par rapport au bras sur lequel ladite branche de travail est montée, lors de l'activation d'un moyen d'actionnement de la branche de travail, entre une position de repos autorisant un jeu avec une paroi interne d'une entrée d'air de la nacelle lorsque ledit ensemble propulsif est monté sur ledit ensemble de manutention, et une position de travail selon laquelle ladite branche de travail vient au contact de ladite paroi interne de ladite entrée d'air de la nacelle, de sorte à exercer un effort de plaquage desdites branches de manipulation sur la paroi interne de l'entrée d'air.

Ainsi, en prévoyant un ensemble de manutention comportant des branches de manipulation exerçant un effort de plaquage sur la paroi interne de l'entrée d'air, l'ensemble de manutention peut être utilisé en particulier sur les nacelles dont l'entrée d'air est laminaire, c'est-à-dire qui ne comporte pas de ferrure d'attache sur lesquels sont montées des élingues de manipulation dans l'art antérieur.

Selon des caractéristiques optionnelles de l'ensemble de manutention :
- le moyen d'actionnement de la branche de travail comporte un ressort de précontrainte, comportant une première extrémité montée sur la branche de travail et une deuxième extrémité montée sur le bras sur lequel est montée ladite branche de travail ;
- au moins une des branches de manipulation est au moins en partie gainé d'un matériau élastomère ; cela permet de ne pas abîmer la paroi interne de l'entrée d'air. La présence du revêtement élastomère autour des branches de manipulation permet en outre de transmettre un bon effort de plaquage des branches de manipulation sur la paroi interne de l'entrée d'air ;
- dans une réalisation, l'ensemble de manutention comporte en outre un bras de support destiné à être relié à un anneau de hissage externe, le châssis étant monté en rotation sur ledit bras de support autour de l'axe transverse audit axe longitudinal de l'ensemble de manutention ;
- dans une réalisation, le bras de support est au moins en partie gainé d'un matériau élastomère ;
- dans une réalisation, l'ensemble de manutention comporte un contrepoids monté à une extrémité du châssis dudit ensemble de manutention, de sorte à permettre un maintien horizontal de l'ensemble propulsif lorsqu'un ensemble propulsif est monté sur ledit ensemble de manutention ;
- dans une réalisation, l'ensemble de manutention comporte en outre un dispositif de blocage en translation de l'entrée d'air de la nacelle lorsque ledit ensemble propulsif est monté sur ledit ensemble de manutention ;
- dans une réalisation, au moins une desdites au moins trois branches de manipulation comporte un fourreau et une ouverture, et le dispositif de blocage en translation de l'entrée d'air comporte :
   ∘ au moins un loquet de blocage, monté sur au moins une branche de manipulation de l'ensemble de manutention, et
   ∘ un moyen d'actionnement dudit loquet de blocage,
   ledit au moins un loquet de blocage étant mobile le long d'un axe vertical de ladite branche de manipulation lors de l'activation dudit moyen d'actionnement dudit loquet de blocage, entre une position de repos selon laquelle ledit loquet de blocage est contenu à l'intérieur du fourreau de ladite branche de manipulation et une position de blocage selon laquelle ledit loquet de blocage est au moins en partie extrait dudit fourreau à travers ladite ouverture de ladite branche de manipulation, de façon à définir une butée en contact avec un bord aval de l'entrée d'air de la nacelle lorsque ledit ensemble propulsif est monté sur ledit ensemble de manutention ;
- le moyen d'actionnement du loquet de blocage peut comporter selon une réalisation :
   ∘ un coulisseau de commande de blocage,
   ∘ un coulisseau suiveur, monté mobile à l'intérieur du fourreau,
   ∘ une came, en prise avec ledit coulisseau suiveur et avec ledit loquet de blocage,
   ∘ un tirant, comportant une première extrémité solidaire du coulisseau suiveur et une deuxième extrémité solidaire du coulisseau de commande de blocage,
   le coulisseau de commande de blocage étant monté mobile le long du châssis dudit ensemble de manutention, entre une position de repos correspondant à la position de repos du loquet de blocage et une position de blocage correspondant à la position de blocage du loquet de blocage.
- selon une réalisation, lorsque le coulisseau de commande de blocage se trouve dans sa position de repos un jeu J longitudinal est défini entre ledit coulisseau de commande de blocage et lesdits bras du châssis de l'ensemble de manutention, et lorsque le jeu J est consommé, le coulisseau de commande de blocage passe de sa position de repos vers sa position de blocage.

La présente invention concerne aussi un procédé de manutention d'un ensemble propulsif, ledit ensemble propulsif comprenant :
- une nacelle comprenant un entrée d'air, et
- un turboréacteur d'aéronef, comportant un carter de soufflante sur lequel est attachée ladite entrée d'air de ladite nacelle,
ledit procédé de manutention étant remarquable en ce qu'il comporte les étapes successives suivantes visant à :
- introduire les branches de manipulation de l'ensemble de manutention selon l'invention, à l'intérieur de ladite entrée d'air de ladite nacelle ;
- faire passer la branche de travail de sa position de repos autorisant un jeu avec une paroi interne de ladite entrée d'air de la nacelle vers sa position de travail selon laquelle ladite branche de travail vient au contact de ladite paroi interne de ladite entrée d'air de la nacelle, de sorte à exercer un effort de plaquage desdites branches de manipulation sur la paroi interne de l'entrée d'air ;
- détacher ladite entrée d'air du carter de soufflante du turboréacteur.

Le procédé de manutention de l'invention peut en outre comporter une étape supplémentaire, postérieure à l'étape selon laquelle on fait passer la branche de travail de sa position de repos vers sa position de travail et antérieure à laquelle on détache l'entrée d'air du carter de soufflante du turboréacteur, visant à déplacer le loquet de blocage depuis sa position de repos selon laquelle ledit loquet de blocage est contenu à l'intérieur du fourreau de ladite branche de manipulation vers sa position de blocage selon laquelle ledit loquet de blocage est au moins en partie extrait dudit fourreau à travers ladite ouverture de ladite branche de manipulation, de façon à définir une butée en contact avec un bord aval de l'entrée d'air de la nacelle.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe longitudinale d'un ensemble propulsif de l'art antérieur ;
- les figures 2 et 3 illustrent un ensemble de manutention de l'art antérieur supportant une entrée d'air d'une nacelle de turboréacteur ;
- la figure 4 est une vue de face de l'ensemble de manutention selon l'invention ;
- la figure 5 est une vue en coupe selon la ligne V-V de la figure 4, l'ensemble de manutention supportant une entrée d'air de nacelle de turboréacteur dans une position horizontale ;
- la figure 6 est une vue de détail de la zone VI de la figure 5 ;
- la figure 7 est une vue similaire à celle de la figure 6, le dispositif de blocage de l'ensemble de manutention étant en position de blocage ;
- la figure 8 est une vue en coupe selon la ligne VIII-VIII de la figure 6 ;
- la figure 9 est une vue analogue à celle de la figure 5, l'ensemble de manutention supportant une entrée d'air de nacelle de turboréacteur dans une position verticale.

Dans la description et dans les revendications, les termes « amont » et «aval » doivent s'entendre par rapport à la circulation du flux d'air à l'intérieur de l'ensemble propulsif formé par la nacelle et le turboréacteur, c'est-à-dire de la gauche vers la droite en référence à la figure 1.

De même, on utilisera à titre non limitatif les expressions « interne » ou « intérieur » et « externe » ou « extérieur » en référence à l'éloignement radial par rapport à l'axe longitudinal de l'ensemble propulsif, l'expression « interne » ou « intérieur » définissant une zone radialement plus proche de l'axe longitudinal de la nacelle, par opposition à l'expression « externe » ou « extérieur ».

Par ailleurs, dans la description et les revendications, pour clarifier la description et les revendications, on adoptera à titre non limitatif la terminologie longitudinal, vertical et transversal en référence au trièdre direct L, V, T indiqué aux figures, dont l'axe longitudinal L est parallèle à l'axe longitudinal de l'ensemble de manutention.

En outre, sur l'ensemble des figures, des références identiques ou analogues représentent des organes ou ensembles d'organes identiques ou analogues.

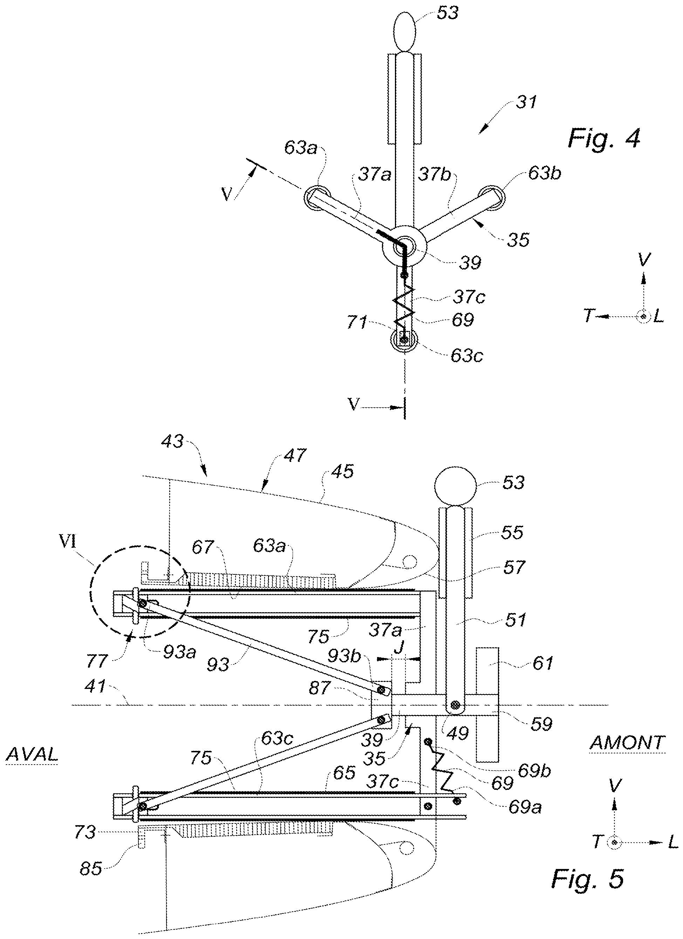

On se réfère à la figure 4 illustrant l'ensemble de manutention 31 de l'invention en vue de face, et à la figure 5 illustrant en coupe selon la ligne V-V de la figure 4 l'ensemble de manutention 31 supportant une entrée d'air d'une nacelle de turboréacteur.

L'ensemble de manutention 31 comporte un châssis 35. Le châssis 35 comporte dans l'exemple donné trois bras 37a, 37b, 37c, qui sont radialement espacés entre eux et qui sont montés sur un moyeu 39. Dans une réalisation, l'angle formée par deux bras consécutifs est environ égal à 120°. Il peut être envisagé de prévoir un angle entre deux bras consécutifs différent de sorte que les bras 37a, 37b, 37c ne sont pas régulièrement répartis radialement. Aussi, dans une réalisation, il peut être envisagé de monter davantage de bras pour former le châssis, par exemple quatre bras.

Le châssis 35 comporte un axe longitudinal 41 qui correspond à l'axe longitudinal du moyeu 39, qui correspond encore à l'axe longitudinal d'un ensemble propulsif 43 lorsqu'un tel ensemble propulsif est monté sur l'ensemble de manutention 31. On note que dans l'ensemble des figures, seule une entrée d'air 45 d'une nacelle 47 de l'ensemble propulsif 43 est représenté en position de maintenance sur l'ensemble de manutention 31.

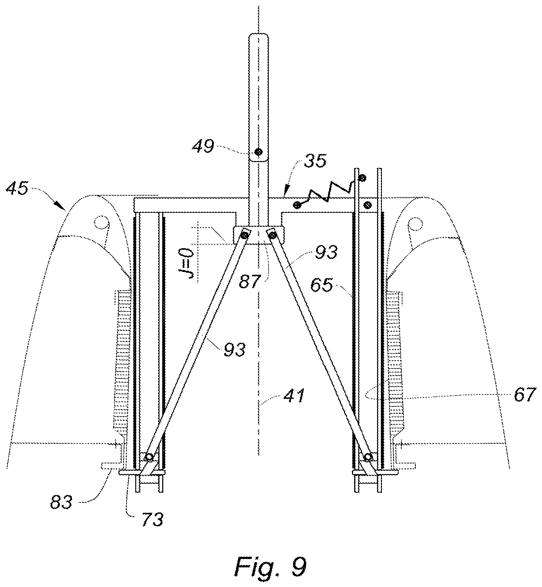

Le châssis 35 est mobile en rotation autour d'un axe 49 transverse à l'axe longitudinal 41 de l'ensemble de manutention, de sorte à permettre un passage de l'entrée d'air 45 de la nacelle depuis sa position horizontale représentée à la figure 5 vers une position verticale (visible à la figure 9) comme on va le voir dans la suite de la description. A titre d'exemple, la rotation du châssis 35 peut être obtenue grâce à un bras de support 51 destiné à être relié à un anneau de hissage 53 externe à l'ensemble de manutention ou à tout autre système de levage, et en montant le moyeu 39 du châssis 35 en rotation sur le bras de support 51, autour de l'axe 49 transverse à l'axe longitudinal 41 de l'ensemble de manutention 31.

Selon une réalisation, le bras de support 51 peut être au moins en partie gainé d'un matériau élastomère 55, ceci afin de ne pas abîmer le bord d'attaque 57 de l'entrée d'air 45 lorsque l'ensemble propulsif 43 est monté sur l'ensemble de manutention 31.

Afin de permettre le maintien en position horizontale de l'ensemble propulsif 43 sur l'ensemble de manutention 31, l'extrémité 59 amont du châssis, c'est-à-dire l'extrémité qui est la plus proche du bord d'attaque de l'entrée d'air 45 lorsque l'ensemble propulsif 43 est monté sur l'ensemble de manutention, est munie d'un contrepoids 61 pouvant être monté sur le moyeu 39.

L'ensemble de manutention 31 de l'invention comporte en outre, dans l'exemple donné d'un châssis à trois bras, trois branches 63a, 63b, 63c de manipulation de l'entrée d'air 45 de la nacelle 47. Chaque branche 63a, 63b, 63c est respectivement montée sur chacun des bras 37a, 37b, 37c du châssis 39, transversalement à ces derniers. En d'autres termes, les branches 63a, 63b, 63c de manipulation de l'entrée d'air s'étendent le long de l'axe longitudinal 41 de l'ensemble de manutention 31.

Selon l'invention, au moins une des branches de manipulation est une branche dite de travail. Dans l'exemple, la branche 63c de manipulation forme une branche de travail 65.

La branche de travail 65 est utilisée afin de permettre un bon plaquage de l'ensemble des branches sur une paroi interne 67 de l'entrée d'air 45. A cet effet, la branche de travail 65 est mobile par rapport au bras 37c du châssis sur lequel elle est montée, lors de l'activation d'un moyen d'actionnement.

Selon l'exemple, un tel moyen d'actionnement peut être réalisé en prévoyant de monter un moyen élastique tel qu'un ressort de précontrainte 69 entre la branche de travail 65 et le bras 37c du châssis.

Selon une variante non illustrée, le moyen d'actionnement de la branche de travail peut être un actionneur tel qu'un vérin, hydraulique, pneumatique ou électrique.

Le ressort de précontrainte 69 comporte une première extrémité 69a montée sur la branche de travail 65 et une deuxième extrémité 69b montée sur le bras 37c sur lequel est montée la branche de travail 65. L'extrémité du bras 37c la plus radialement éloignée du moyeu 39 peut être pourvue d'une rainure 71 le long de laquelle peut se déplacer la branche de travail 65 lorsque le ressort de précontrainte 69 est sollicité.

Dans une position de repos de la branche de travail 65, un jeu (non visible aux figures) est défini entre la branche de travail 65 et la paroi interne 67 de l'entrée d'air 45 de la nacelle.

Dans une position de travail de la branche de travail 65, telle que celle représentée à la figure 5, le ressort de précontrainte 69 est comprimé et la branche de travail 65 vient au contact de la paroi interne 67 de l'entrée d'air et est maintenue plaquée contre cette paroi interne sous l'action du ressort.

L'effort de plaquage obtenu par la branche de travail 65 est transmis aux branches de manipulation 63a, 63b, de sorte que l'ensemble des branches de manipulation de l'ensemble de manutention exerce un effort de plaquage sur la paroi 67 interne de l'entrée d'air 45.

Lorsque les branches de manipulation 63a, 63b, 63c viennent au contact de la paroi interne 67 de l'entrée d'air 45 et exercent un effort de plaquage sur cette paroi interne, l'entrée d'air 45 peut être détachée en toute sécurité du carter de soufflante (non visible sur la figure 5) auquel est attachée l'entrée d'air lorsque la nacelle est en fonctionnement. Pour ce faire, on détache le carter de soufflante du turboréacteur au niveau de la bride de fixation 73 de l'entrée d'air 45.

Selon une variante, les branches de manipulation 63a, 63b, 63c sont gainées, sur une partie de leur longueur ou sur tout leur longueur, d'un matériau élastomère 75. Cela permet de ne pas abîmer la paroi interne 67 de l'entrée d'air. La présence du revêtement élastomère autour des branches de manipulation permet en outre d'augmenter encore l'effort de plaquage des branches de manipulation sur la paroi interne 67 de l'entrée d'air. Selon une réalisation, une seule ou deux des branches de manipulation 63a, 63b, 63c est gainée du matériau élastomère 75.

Selon une réalisation de l'ensemble de manipulation 31, l'ensemble de manutention comporte un dispositif de blocage 77 en translation de l'entrée d'air 45 de la nacelle lorsque l'ensemble propulsif 43 est monté sur l'ensemble de manutention, conçu et agencé dans l'ensemble de manutention pour bloquer l'entrée d'air en translation le long de l'axe longitudinal 41 de l'ensemble de manutention 31.

Comme on l'a vu précédemment, l'effort de plaquage des branches de manipulation 63a, 63b, 63c sur la paroi interne 67 de l'entrée d'air 45 permet de détacher en toute sécurité l'entrée d'air 45 du carter de soufflante.

Le dispositif de blocage 77 permet, en boquant la translation de l'entrée d'air le long de l'axe longitudinal de l'ensemble de manutention, de sécuriser davantage le maintien de l'entrée d'air par les branches de manipulation 63a, 63b, 63c.

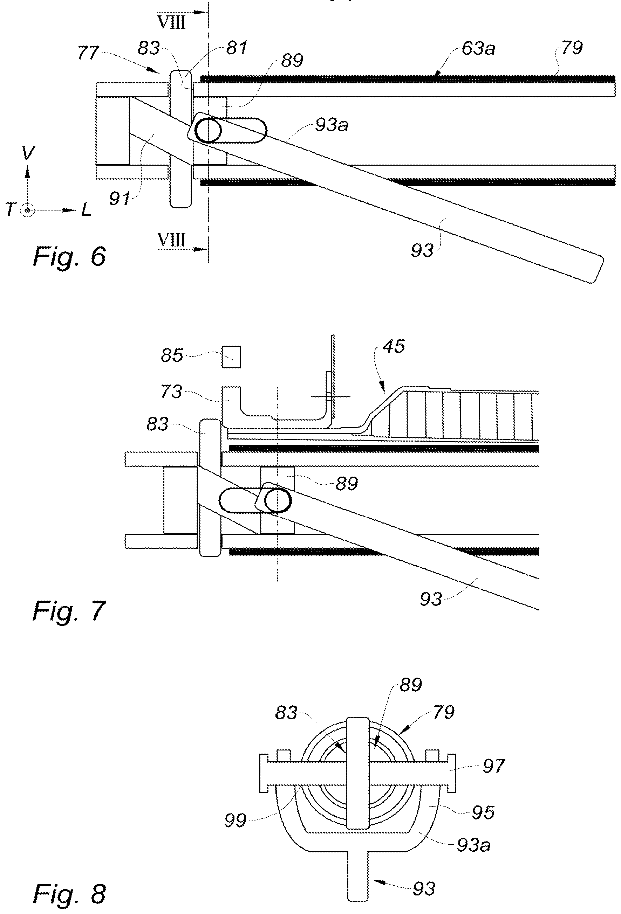

Une réalisation de ce dispositif de blocage de l'entrée d'air est donnée à titre d'exemple en référence aux figures 5 à 8 auxquelles on se réfère, la figure 6 étant un agrandissement de la zone VI de la figure 5, la figure 7 étant une vue similaire à celle de la figure 6, l'ensemble de manutention étant en position de blocage, et la figure 8 étant une vue en coupe selon les lignes VIII-VIII de la figure 6.

Il est envisagé selon la réalisation représentée de prévoir autant de dispositifs de blocage que l'ensemble de manutention comporte de bras et de branches de manipulation. Il peut bien évidemment être également envisagé de munir l'ensemble de manutention d'un seul dispositif de blocage, ou de deux dispositifs de blocage lorsque l'ensemble de manutention comporte trois bras et trois branches de manipulation. Le dispositif de blocage 77 est décrit dans la suite de la description en référence à la branche de manipulation 63a et se duplique à l'identique pour les autres branches de manipulation de l'ensemble de manutention.

Le dispositif de blocage 77 est obtenu tout d'abord en prévoyant de réaliser la branche de manipulation 63a sous la forme d'un fourreau 79 comportant une ouverture 81 pratiquée selon un axe vertical du fourreau. Ensuite, le dispositif de blocage 77 comporte un loquet de blocage 83 monté sur la branche de manipulation 63a. Le loquet de blocage 83 est activable par l'intermédiaire d'un moyen d'actionnement, dont une réalisation de ce moyen d'actionnement va être donnée à titre d'exemple dans la suite de la description.

Le loquet de blocage 83 est mobile le long d'un axe vertical de la branche de manipulation lors de l'activation du moyen d'actionnement entre une position de repos dans laquelle le loquet de blocage 83 est contenu à l'intérieur du fourreau 79 et une position de blocage représentée à la figure 7.

Dans cette position de blocage, le loquet de blocage 83 est au moins partiellement extrait du fourreau 79 à travers l'ouverture 81. Le loquet de blocage 83 définit dans cette position de blocage une butée, dont un bord aval 85 de l'entrée d'air 45, par exemple la bride de liaison 73 au carter de soufflante, vient en contact lorsque l'ensemble propulsif est monté sur l'ensemble de manutention et que le carter de soufflante a été détaché de l'entrée d'air comme on l'a vu précédemment.

Selon un exemple de réalisation du moyen d'actionnement du loquet de blocage 83, le moyen d'actionnement du loquet de blocage comporte un coulisseau de commande de blocage 87 (visible à la figure 5) définissant, pour une position de repos correspondant à une position de repos du loquet de blocage un jeu J longitudinal défini entre le coulisseau de blocage 87 et les bras 37a, 37b, 37c du châssis 35 de l'ensemble de manutention.

Le moyen d'actionnement du loquet de blocage 83 comporte par ailleurs un coulisseau suiveur 89 monté mobile à l'intérieur du fourreau 79, ainsi qu'une came 91 montée en prise avec le coulisseau suiveur 89 et avec le loquet de blocage 83.

Le mouvement de déplacement du coulisseau de commande de blocage 87 est transmis à l'ensemble formé par le coulisseau suiveur 89, la came 91 et le loquet de blocage 83 grâce à un tirant 93. Le tirant 93 comporte à cet effet une première extrémité 93a solidaire du coulisseau suiveur 89 et une deuxième extrémité solidaire du coulisseau de commande de blocage 83.

En consommant le jeu J, le coulisseau de commande de blocage 89 passe de sa position de repos vers sa position de blocage correspondant à la position de blocage du loquet de blocage. La consommation du jeu J peut être obtenue manuellement par l'action d'un opérateur directement sur le coulisseau de commande de blocage 89.

On a donné à la figure 8, qui est une vue en coupe selon la ligne VIII-VIII de la figure 6, une représentation de la liaison entre l'extrémité 93a du tirant et l'ensemble formé par le fourreau 79, le coulisseau suiveur 89, le loquet de blocage 83 et la came 91. L'extrémité 93a du tirant 93 comporte une fourchette 95 sur laquelle est fixée une tige 97 traversant une ouverture transversale 99 du fourreau 79 et traversant le coulisseau suiveur 89.

Comme on l'a vu précédemment, l'effort de plaquage des branches de manipulation 63a, 63b, 63c sur la paroi interne 67 de l'entrée d'air 45 permet de détacher en toute sécurité l'entrée d'air 45 du carter de soufflante. Cet effort de plaquage est également suffisant afin d'opérer un basculement de l'entrée d'air en position verticale. Toutefois, le fait d'équiper l'ensemble de manutention 31 d'un dispositif de blocage en translation de l'entrée d'air permet de sécuriser davantage le maintien de l'entrée d'air en position lors du passage de l'entrée d'air depuis sa position horizontale vers sa position verticale représentée à la figure 9 à laquelle on se réfère à présent.

Lorsque le jeu J a été consommé, le coulisseau de commande de blocage 87 se retrouve dans sa position de blocage et a entraîné de concert le passage du loquet de blocage 83 dans sa position de blocage dans laquelle il forme une butée sur laquelle le bord aval 85 de l'entrée d'air vient en contact. Le maintien en position de blocage du coulisseau de commande de blocage 87 peut être assuré partout moyen mécanique de liaison connu de l'homme du métier.

La mise en rotation du châssis 35 sur son axe de rotation 49 transverse à l'axe longitudinal 41 de l'ensemble de manutention entraîne le passage de l'entrée d'air 45 depuis sa position horizontale représentée à la figure 5 vers sa position verticale.

Lorsque l'entrée d'air 45 se trouve en position verticale, l'entrée d'air est disposée dans sa position verticale sur un support approprié, par exemple sur le sol. La branche de travail 65 de l'ensemble de manutention peut passer de sa position de travail vers sa position de repos autorisant un jeu avec la paroi interne 67 de l'entrée d'air, libérant ainsi la paroi interne 67 de l'entrée d'air de l'effort de plaquage auquel elle était soumise, permettant le retrait des branches de manipulation de l'intérieur de l'entrée d'air.

## Revendications

1. Ensemble de manutention (31) d'un ensemble propulsif comportant une nacelle et un turboréacteur d'aéronef, ledit ensemble de manutention (31) étant **caractérisé en ce qu'**il comporte :
- un châssis (35), comportant au moins trois bras (37a, 37b, 37c) radialement espacés entre eux, ledit châssis (35) étant mobile en rotation autour d'un axe (49) transverse à un axe longitudinal (41) de l'ensemble de manutention (31), et
- au moins trois branches de manipulation (63a, 63b, 63c) de ladite nacelle, chacune étant montée transversalement sur un desdits au moins trois bras (37a, 37b, 37c) du châssis (35), s'étendant le long dudit axe longitudinal (41) dudit ensemble de manutention (31), lesdites au moins trois branches de manipulation (63a, 63b, 63c) comportant au moins une branche de travail (65) mobile, par rapport au bras (37a, 37b, 37c) sur lequel ladite branche de travail (65) est montée, lors de l'activation d'un moyen d'actionnement de la branche de travail (65), entre une position de repos autorisant un jeu avec une paroi interne (67) d'une entrée d'air (45) de la nacelle lorsque ledit ensemble propulsif est monté sur ledit ensemble de manutention (31), et une position de travail selon laquelle ladite branche de travail (65) vient au contact de ladite paroi interne de ladite entrée d'air de la nacelle, de sorte à exercer un effort de plaquage desdites branches de manipulation (63a, 63b, 63c) sur la paroi interne (67) de l'entrée d'air (45).

2. Ensemble de manutention (31) d'un ensemble propulsif selon la revendication 1, **caractérisé en ce que** le moyen d'actionnement de la branche de travail (65) comporte un ressort de précontrainte (69), comportant une première extrémité (69a) montée sur la branche de travail (65) et une deuxième extrémité (69b) montée sur le bras (37a, 37b, 37c) sur lequel est montée ladite branche de travail (65).

3. Ensemble de manutention (31) d'un ensemble propulsif selon l'une des revendications 1 ou 2, **caractérisé en ce qu'**au moins une des branches de manipulation (63a, 63b, 63c) est au moins en partie gainé d'un matériau élastomère (75).

4. Ensemble de manutention (31) d'un ensemble propulsif selon l'une quelconque des revendications 1 à 3, **caractérisé en ce qu'**il comporte un bras de support (51) destiné à être relié à un anneau de hissage externe, le châssis (35) étant monté en rotation sur ledit bras de support autour de l'axe (49) transverse audit axe longitudinal (41) de l'ensemble de manutention (31).

5. Ensemble de manutention (31) d'un ensemble propulsif selon la revendication 4, **caractérisé en ce que** le bras de support (51) est au moins en partie gainé d'un matériau élastomère (55).

6. Ensemble de manutention (31) d'un ensemble propulsif selon l'une quelconque des revendications 1 à 4, **caractérisé en ce qu'**il comporte un contrepoids (61) monté à une extrémité du châssis (35) dudit ensemble de manutention (31), de sorte à permettre un maintien horizontal de l'ensemble propulsif lorsqu'un ensemble propulsif est monté sur ledit ensemble de manutention (31).

7. Ensemble de manutention (31) d'un ensemble propulsif selon l'une quelconque des revendications 1 à 6, **caractérisé en ce qu'**il comporte en outre un dispositif de blocage (77) en translation de l'entrée d'air de la nacelle lorsque ledit ensemble propulsif est monté sur ledit ensemble de manutention (31).

8. Ensemble de manutention (31) d'un ensemble propulsif selon la revendication 7, dans lequel au moins une desdites au moins trois branches de manipulation (63a, 63b, 63c) comporte un fourreau (79) et une ouverture (81), ledit ensemble de manutention (31) étant **caractérisé en ce que** le dispositif de blocage (77) en translation de l'entrée d'air comporte :
- au moins un loquet de blocage (83), monté sur au moins une branche de manipulation (63a, 63b, 63c) de l'ensemble de manutention (31), et
- un moyen d'actionnement dudit loquet de blocage (83),
ledit au moins un loquet de blocage (83) étant mobile le long d'un axe vertical de ladite branche de manipulation (63a, 63b, 63c) lors de l'activation dudit moyen d'actionnement dudit loquet de blocage (83), entre une position de repos selon laquelle ledit loquet de blocage (83) est contenu à l'intérieur du fourreau (79) de ladite branche de manipulation (63a, 63b, 63c) et une position de blocage selon laquelle ledit loquet de blocage (83) est au moins en partie extrait dudit fourreau à travers ladite ouverture (81) de ladite branche de manipulation (63a, 63b, 63c), de façon à définir une butée en contact avec un bord aval (85) de l'entrée d'air de la nacelle lorsque ledit ensemble propulsif est monté sur ledit ensemble de manutention (31).

9. Ensemble de manutention (31) d'un ensemble propulsif selon la revendication 8, **caractérisé en ce que** le moyen d'actionnement du loquet de blocage (83) comporte :
- un coulisseau de commande de blocage (87),
- un coulisseau suiveur (89), monté mobile à l'intérieur du fourreau,
- une came (91), en prise avec ledit coulisseau suiveur (89) et avec ledit loquet de blocage (83),
- un tirant (93), comportant une première extrémité (93a) solidaire du coulisseau suiveur (89) et une deuxième extrémité (93b) solidaire du coulisseau de commande de blocage (87),
le coulisseau de commande de blocage (87) étant monté mobile le long du châssis (35) dudit ensemble de manutention (31), entre une position de repos correspondant à la position de repos du loquet de blocage (83) et une position de blocage correspondant à la position de blocage du loquet de blocage (83).

10. Ensemble de manutention (31) d'un ensemble propulsif selon la revendication 9, **caractérisé en ce que** lorsque le coulisseau de commande de blocage (87) se trouve dans sa position de repos un jeu J longitudinal est défini entre ledit coulisseau de commande de blocage (87) et lesdits bras (37a, 37b, 37c) du châssis (35) de l'ensemble de manutention (31), et lorsque le jeu J est consommé, le coulisseau de commande de blocage passe de sa position de repos vers sa position de blocage.

11. Procédé de manutention d'un ensemble propulsif (43), ledit ensemble propulsif (43) comprenant :
- une nacelle (47) comprenant un entrée d'air (45), et
- un turboréacteur d'aéronef, comportant un carter de soufflante sur lequel est attachée ladite entrée d'air (45) de ladite nacelle,
ledit procédé de manutention étant **caractérisé en ce qu'**il comporte les étapes successives suivantes visant à :
- introduire les branches de manipulation (63a, 63b, 63c) de l'ensemble de manutention (31) selon l'une quelconque des revendications 1 à 10 à l'intérieur de ladite entrée d'air (45) de ladite nacelle ;
- faire passer la branche de travail (65) de sa position de repos autorisant un jeu avec une paroi interne (67) de ladite entrée d'air (45) de la nacelle vers sa position de travail selon laquelle ladite branche de travail (65) vient au contact de ladite paroi interne (67) de ladite entrée d'air de la nacelle, de sorte à exercer un effort de plaquage desdites branches de manipulation (63a, 63b, 63c) sur la paroi interne (67) de l'entrée d'air ;
- détacher ladite entrée d'air du carter de soufflante du turboréacteur.

12. Procédé de manutention d'un ensemble propulsif (43) selon la revendication 11, dans lequel l'ensemble de manutention (31) est conforme à l'une quelconque des revendications 7 à 10,
ledit procédé de manutention étant **caractérisé en ce qu'**il comporte une étape supplémentaire, postérieure à l'étape selon laquelle on fait passer la branche de travail (65) de sa position de repos vers sa position de travail et antérieure à laquelle on détache l'entrée d'air du carter de soufflante du turboréacteur, visant à déplacer le loquet de blocage (83) depuis sa position de repos selon laquelle ledit loquet de blocage (83) est contenu à l'intérieur du fourreau (79) de ladite branche de manipulation (63a, 63b, 63c) vers sa position de blocage selon laquelle ledit loquet de blocage (83) est au moins en partie extrait dudit fourreau à travers ladite ouverture de ladite branche de manipulation (63a, 63b, 63c), de façon à définir une butée en contact avec un bord aval (85) de l'entrée d'air (45) de la nacelle.

## Patentansprüche

1. Handhabungsanordnung (31) einer Antriebsanordnung, die eine Gondel beinhaltet und eine Strahlturbine eines Flugzeugs, wobei die Handhabungsanordnung (31) **dadurch gekennzeichnet ist, dass** sie beinhaltet:
- einen Rahmen (35), der mindestens drei radial voneinander beabstandete Arme (37a, 37b, 37c) beinhaltet, wobei der Rahmen (35) um eine Achse (49) drehbar ist, die quer zu einer Längsachse (41) der Handhabungsanordnung (31) verläuft, und
- mindestens drei Bedienungsbügel (63a, 63b, 63c) der Gondel, die jeweils in Querrichtung auf einem der mindestens drei Arme (37a, 37b, 37c) des Rahmens (35) montiert sind, sich entlang der Längsachse (41) der Handhabungsanordnung (31) erstreckend, wobei die mindestens drei Bedienungsbügel (63a, 63b, 63c) mindestens einen in Bezug auf den Arm (37a, 37b, 37c) beweglichen Arbeitsbügel (65) beinhalten, auf dem der Arbeitsbügel (65) montiert ist, bei der Aktivierung eines Betätigungsmittels des Arbeitsbügels (65), zwischen einer Ruhestellung, die ein Spiel mit einer Innenwand (67) eines Lufteinlasses (45) der Gondel zulässt, wenn die Antriebsanordnung auf der Handhabungsanordnung (31) montiert ist, und einer Arbeitsstellung, bei der der Arbeitsbügel (65) in Kontakt mit der Innenwand des Lufteinlasses der Gondel kommt, so dass eine Greifkraft der Bedienungsbügel (63a, 63b, 63c) auf die Innenwand (67) des Lufteinlasses (45) ausgeübt wird.

2. Handhabungsanordnung (31) einer Antriebsanordnung nach Anspruch 1, **dadurch gekennzeichnet, dass** das Betätigungsmittel des Arbeitsbügels (65) eine Vorspannfeder (69) beinhaltet, die ein erstes Ende (69a) beinhaltet, das auf dem Arbeitsbügel (65) montiert ist, und ein zweites Ende (69b), das auf dem Arm (37a, 37b, 37c) montiert ist, auf dem der Arbeitsbügel (65) montiert ist.

3. Handhabungsanordnung (31) einer Antriebsanordnung nach einem der Ansprüche 1 oder 2, **dadurch gekennzeichnet, dass** mindestens einer der Bedienungsbügel (63a, 63b, 63c) mindestens teilweise mit einem Elastomermaterial (75) ummantelt ist.

4. Handhabungsanordnung (31) einer Antriebsanordnung nach einem der Ansprüche 1 bis 3, **dadurch gekennzeichnet, dass** sie einen Stützarm (51) beinhaltet, der dazu bestimmt ist, mit einem äußeren Hebering verbunden zu werden, wobei der Rahmen (35) auf dem Stützarm drehbar um die Achse (49), die quer zur Längsachse (41) der Handhabungsanordnung (31) verläuft, montiert ist.

5. Handhabungsanordnung (31) einer Antriebsanordnung nach Anspruch 4, **dadurch gekennzeichnet, dass** der Stützarm (51) mindestens teilweise mit einem Elastomermaterial (55) ummantelt ist.

6. Handhabungsanordnung (31) einer Antriebsanordnung nach einem der Ansprüche 1 bis 4, **dadurch gekennzeichnet, dass** sie ein Gegengewicht (61) beinhaltet, das an einem Ende des Rahmens (35) der Handhabungsanordnung (31) montiert ist, um einen horizontalen Halt der Antriebsanordnung zu ermöglichen, wenn eine Antriebsanordnung auf der Handhabungsanordnung (31) montiert ist.

7. Handhabungsanordnung (31) einer Antriebsanordnung nach einem der Ansprüche 1 bis 6, **dadurch gekennzeichnet, dass** sie ferner ein Verriegelungssystem (77) in Translation des Lufteinlasses der Gondel beinhaltet, wenn die Antriebsanordnung auf der Handhabungsanordnung (31) montiert ist.

8. Handhabungsanordnung (31) einer Antriebsanordnung nach Anspruch 7, wobei mindestens einer der mindestens drei Bedienungsbügel (63a, 63b, 63c) eine Hülse (79) und eine Öffnung (81) beinhaltet, wobei die Handhabungsanordnung (31) **dadurch gekennzeichnet ist, dass** das Verriegelungssystem (77) in Translation des Lufteinlasses beinhaltet:
- mindestens eine Schnappverriegelung (83), die an mindestens einem Bedienungsbügel (63a, 63b, 63c) der Handhabungsanordnung (31) montiert ist, und
- ein Betätigungsmittel der Schnappverriegelung (83),
wobei die mindestens eine Schnappverriegelung (83) beweglich entlang einer vertikalen Achse der Bedienungsbügel (63a, 63b, 63c) ist, während der Aktivierung des Betätigungsmittel der Schnappverriegelung (83), zwischen einer Ruhestellung, wobei die Schnappverriegelung (83) im Inneren der Hülse (79) der Bedienungsbügel (63a, 63b, 63c) zurückgehalten wird, und einer Verriegelungsstellung, wobei die Schnappverriegelung (83) mindestens teilweise aus der Hülse durch die Öffnung (81) der Bedienungsbügel (63a, 63b, 63c) herausgezogen ist, um einen Anschlag in Kontakt mit einer stromabwärtigen Kante (85) des Lufteinlasses der Gondel zu definieren, wenn die Antriebsanordnung auf der Handhabungsanordnung (31) montiert ist.

9. Handhabungsanordnung (31) einer Antriebsanordnung nach Anspruch 8, **dadurch gekennzeichnet, dass** das Betätigungsmittel der Schnappverriegelung (83) beinhaltet:
- einen Verriegelungssteuerschieber (87),
- einen Nachlaufschieber (89), der beweglich im Inneren der Hülse montiert ist,
- eine Nocke (91), die mit dem Nachlaufschieber (89) und mit der Schnappverriegelung (83) in Eingriff steht,
- eine Zugstange (93), ein erstes Ende (93a) beinhaltend, das mit dem Nachlaufschieber (89) fest verbunden ist, und ein zweites Ende (93b), das mit dem Verriegelungssteuerschieber (87) fest verbunden ist,
wobei der Verriegelungssteuerschieber (87) beweglich entlang des Rahmens (35) der Handhabungsanordnung (31) montiert ist, zwischen einer Ruhestellung, die der Ruhestellung der Schnappverriegelung (83) entspricht, und einer Verriegelungsstellung, die der Verriegelungsstellung der Schnappverriegelung (83) entspricht.

10. Handhabungsanordnung (31) einer Antriebsanordnung nach Anspruch 9, **dadurch gekennzeichnet, dass**, wenn sich der Verriegelungssteuerschieber (87) in seiner Ruhestellung befindet, ein Längsspiel J definiert ist zwischen dem Verriegelungssteuerschieber (87) und den Armen (37a, 37b, 37c) des Rahmens (35) der Handhabungsanordnung (31), und, wenn das Spiel J aufgebraucht ist, der Verriegelungssteuerschieber von seiner Ruhestellung in seine Verriegelungsstellung übergeht.

11. Handhabungsverfahren einer Antriebsanordnung (43), wobei die Antriebsanordnung (43) umfasst:
- eine Gondel (47), einen Lufteinlass (45) umfassend, und
- eine Strahlturbine eines Flugzeugs, ein Gebläsegehäuse beinhaltend, an dem der Lufteinlass (45) der Gondel befestigt ist,
wobei das Handhabungsverfahren **dadurch gekennzeichnet ist, dass** es die folgenden aufeinanderfolgenden Schritte beinhaltet, um zu erwirken:
- Einführen der Bedienungsbügel (63a, 63b, 63c) der Handhabungsanordnung (31) nach einem der Ansprüche 1 bis 10 im Inneren des Lufteinlasses (45) der Gondel;
- Übergeben des Arbeitsbügels (65) von seiner Ruhestellung, die ein Spiel mit einer Innenwand (67) des Lufteinlasses (45) der Gondel zulässt, in seine Arbeitsstellung, bei der der Arbeitsbügel (65) in Kontakt mit der Innenwand (67) des Lufteinlasses der Gondel kommt, so dass eine Greifkraft der Bedienungsbügel (63a, 63b, 63c) auf die Innenwand (67) des Lufteinlasses ausgeübt wird;
- Lösen des Lufteinlasses vom Gebläsegehäuse der Strahlturbine.

12. Handhabungsverfahren einer Antriebsanordnung (43) nach Anspruch 11, wobei die Handhabungsanordnung (31) einem der Ansprüche 7 bis 10 entspricht,
wobei das Handhabungsverfahren **dadurch gekennzeichnet ist, dass** es einen zusätzlichen Schritt beinhaltet nach dem Schritt, in dem der Arbeitsbügel (65) übergeben wird von seiner Ruhestellung in seine Arbeitsstellung und vor dem, wobei der Lufteinlass gelöst wird vom Gebläsegehäuse der Strahlturbine, um zu erwirken, dass sich die Schnappverriegelung (83) aus ihrer Ruhestellung verstellt, wobei die Schnappverriegelung (83) im Inneren der Hülse (79) des Bedienungsbügels (63a 63b, 63c) zurückgehalten wird, in seine Verriegelungsstellung, in der die Schnappverriegelung (83) mindestens teilweise aus der Hülse durch die Öffnung des Bedienungsbügels (63a, 63b, 63c) herausgezogen ist, um einen Anschlag in Kontakt mit einer stromabwärtigen Kante (85) des Lufteinlasses (45) der Gondel zu definieren.

## Claims

1. A handling assembly (31) of a propulsion unit including a nacelle and an aircraft turbojet engine, said handling assembly (31) being **characterized in that** it includes:
a frame (35), including at least three arms (37a, 37b, 37c) radially spaced from one another, said frame (35) being rotatably movable about an axis (49) transverse to a longitudinal axis (41) of the handling assembly (31); and
- at least three manipulation branches (63a, 63b, 63c) of said nacelle, each being mounted transversely on one of said at least three arms (37a, 37b, 37c) of the frame (35), extending along said longitudinal axis (41) of said handling assembly (31), said at least three manipulation branches (63a, 63b, 63c) including at least one working branch (65) moveable relative to the arm (37a, 37b, 37c) on which said movable working branch (65) is mounted, when means for actuating the moveable working branch (65) is activated, between a rest position wherein there is a clearance with an inner wall (67) of an air inlet (45) of the nacelle when said propulsion unit is mounted on said handling assembly (31), and a working position wherein said moveable working branch (65) comes into contact with said inner wall of said air inlet of the nacelle, such that said manipulation branches (63a, 63b, 63c) apply a plating force on the inner wall (67) of the air inlet (45).

2. The handling assembly (31) of a propulsion unit according to claim 1, **characterized in that** the means for actuating the working branch (65) includes a preload spring (69) including a first end (69a) mounted on the working branch (65) and a second end (69b) mounted on the arm (37a, 37b, 37c) on which said working branch (65) is mounted.

3. The handling assembly (31) of a propulsion unit according to any of claims 1 or 2, **characterized in that** at least one of the manipulation branches (63a, 63b, 63c) is at least partly sheathed with an elastomeric material (75).

4. The handling assembly (31) of a propulsion unit according to any one of claims 1 to 3, **characterized in that** it includes a support arm (51) intended to be connected to an outer hoisting ring, the frame (35) being rotatably mounted on said support arm about the axis (49) transverse to said longitudinal axis (41) of the handling assembly (31).

5. The handling assembly (31) of a propulsion unit according to claim 4, **characterized in that** the support arm (51) is at least partly sheathed in an elastomeric material (55).

6. The handling assembly (31) of a propulsion unit according to any one of claims 1 to 4, **characterized in that** it includes a counterweight (61) mounted at one end of the frame (35) of said handling assembly (31), such that the propulsion unit is held horizontally when the propulsion unit is mounted on said handling assembly (31).

7. The handling assembly (31) of a propulsion unit according to any one of claims 1 to 6, **characterized in that** it further includes a device (77) for blocking the air inlet of the nacelle in translation when said propulsion unit is mounted on said handling assembly (31).

8. The handling assembly (31) of a propulsion unit according to claim 7, wherein at least one manipulation branch of said at least three manipulation branches (63a, 63b, 63c) includes a sheath (79) and an opening (81), said handling assembly (31) being **characterized in that** the device (77) for blocking includes:
at least one blocking latch (83) mounted on at least one manipulation branch (63a, 63b, 63c) of the handling assembly (31), and
means for actuating said blocking latch (83),
said at least one blocking latch (83) being movable along a vertical axis of said at least one manipulation branch (63a, 63b, 63c) when said means for actuating said blocking latch (83) is activated, between a rest position wherein said blocking latch (83) is contained inside the sheath (79) of said manipulation branch (63a, 63b, 63c) and a blocking position wherein said blocking latch (83) is at least partly extracted from said sheath through said opening (81) of said one manipulation branch (63a, 63b, 63c), such that a stop in contact with a downstream edge (85) of the air inlet of the nacelle is defined when said propulsion unit is mounted on said handling assembly (31).

9. The handling assembly (31) of a propulsion unit according to claim 8, **characterized in that** the means for actuating the blocking latch (83) includes:
a blocking control slide (87);
a follower slide (89), movably mounted inside the sheath;
a cam (91), engaged with said follower slide (89) and with said blocking latch (83); and
a tie rod (93), including a first end (93a) secured to the follower slide (89) and a second end (93b) secured to the blocking control slide (87),
the blocking control slide (87) being movably mounted along the frame (35) of said handling assembly (31), between a rest position corresponding to the rest position of the blocking latch (83) and a blocking position corresponding to the blocking position of the blocking latch (83).

10. The handling assembly (31) of a propulsion unit according to claim 9, **characterized in that**, when the blocking control slide (87) is in its rest position, a longitudinal clearance J is defined between said blocking control slide (87) and said arms (37a, 37b, 37c) of the frame (35) of the handling assembly (31), and when the clearance J is consumed, the blocking control slide moves from its rest position towards its blocking position.

11. A method for handling a propulsion unit (43) said propulsion unit (43) comprising:
- a nacelle (47) comprising an air inlet (45), and
- an aircraft turbojet engine, including a fan casing on which said air inlet (45) of said nacelle is attached,
said handling method being **characterized in that** it includes the successive following steps aiming at:
- introducing the manipulation branches (63a, 63b, 63c) of the handling assembly (31) according to any one of claims 1 to 10 inside said air inlet (45) of said nacelle;
- moving the working branch (65) from its rest position wherein there is a clearance with an inner wall (67) of said air inlet (45) of the nacelle towards its working position wherein said working branch (65) comes into contact with said inner wall (67) of said air inlet of the nacelle, such that said manipulation branches (63a, 63b, 63c) apply the plating force on the inner wall (67) of the air inlet; and
- detaching said air inlet from the fan casing of the aircraft turbojet engine.

12. The method for handling a propulsion unit (43) according to claim 11, wherein the handling assembly (31) is in accordance with any one of claims 7 to 10,
said handling method being **characterized in that** it includes an additional step, subsequent to the step according to which the working branch (65) is moved from its rest position to its working position and prior to which the air inlet is detached from the fan casing of the turbojet, aimed at moving the blocking latch (83) from its rest position in which said blocking latch (83) is contained inside the sheath (79) of the said manipulation branch (63a, 63b, 63c) towards its blocking position in which said blocking latch (83) is at least partially extracted from said sheath through said opening of said manipulation branch (63a, 63b, 63c), such that a stop in contact with a downstream edge (85) of the air inlet (45) of the nacelle is defined.
